# EUROPÄISCHE PATENTANMELDUNG

(11) **EP 1 631 052 A1**
(43) Veröffentlichungstag der Anmeldung: **01.03.2006**
(21) Anmeldenummer: 04020229.3
(22) Anmeldetag: 26.08.2004
(51) Int. Cl.: H04M 7/00, G10L 19/00, H04L 12/66

(54) **Verfahren zur Steuerung der Kompensation von Paketverlusten**

(71) Anmelder: SIEMENS AKTIENGESELLSCHAFT, 80333 München (DE)
(72) Erfinder: Theimer, Thomas, Dr., 82065 Baierbrunn (DE)
(74) Vertreter: Berg, Peter

(57) **Zusammenfassung**

Die Erfindung betrifft ein Verfahren zur Steuerung der Kompensation von Paketverlusten (PLC) bei einer Übertragung von digitalisierten Sprachsignalen in paketierter Form in einem Netz (KN), wobei die Steuerung der Kompensation (PLC) dynamisch erfolgt. Die Kompensation von Paketverlusten (PLC) ist am Beginn einer Verbindung (VX) zwischen einem Sender (S) und einem Empfänger (E) deaktiviert. Während der bestehenden Verbindung (VX) wird die Übertragungsqualität überwacht (22) und die Kompensation von Paketverlusten (PLC) in Abhängigkeit von der Übertragungsqualität aktiviert (231;232). Das erfindungsgemäße Verfahren hat den Vorteil, dass die Signallaufzeit, besonders bei Netzen mit hoher Übertragungsqualität, die geringe Paketverlustwahrscheinlichkeit und geringe Verzögerungsschwankungen aufweisen, erheblich reduziert wird.

## Beschreibung

Die Erfindung betrifft ein Verfahren zur Steuerung der Kompensation von Paketverlusten bei der Übertragung von digitalisierten Sprachsignalen in paketierter Form in einem Netz.

Als Netz wird definitionsgemäß der Oberbegriff für alle Ressourcen bezeichnet, die voneinander entfernte Dienstzugangspunkte wie zum Beispiel, Netzknoten, Sende- oder Empfangseinrichtungen verbinden und diesen Dienste wie die Übertragung von Sprache oder Daten zu Kommunikationszwecken zur Verfügung stellen. Diese Netze können unterschiedliche Verfahren der Informationsverarbeitung, sogenannte Vermittlungsprinzipien, benutzen - je nachdem, ob sie hauptsächlich Sprache oder Daten übertragen. Dabei werden zwei Vermittlungsprinzipien - das leitungsorientierte und das paketorientierte - unterschieden.

Beim leitungsorientierten Vermittlungsprinzip wird während der gesamten Verbindungsdauer ein durchgehender Kanal geschaltet, auf dem die zu übermittelnden Informationen vom Sender zum Empfänger gelangen. Dabei nehmen alle Informationen den gleichen Weg und kommen immer in jener Reihenfolge an, in der sie auf den Weg gesendet wurden. Angewendet wird das leitungsorientierte Vermittlungsprinzip vor allem in Netzen zur Sprachübertragung wie zum Beispiel analoge Telefonnetze, ISDN- oder GSM-Netze. Wegen ihres Einsatzes zur Sprachübertragung werden leitungsorientierte Netze auch oft als Sprachnetze bezeichnet.

Beim paketorientierten Vermittlungsprinzip wird einer Verbindung zur Übermittlung von Informationen kein permanenter, durchgehender, physikalischer Kanal zur Verfügung gestellt, sondern die Information beim Sender in kleine, einzelne und manchmal auch verschieden lange Pakete aufgeteilt. Diese Pakete werden versehen mit Zusatzdaten zur Identifikation von Sender bzw. Empfänger und einer fortlaufenden Nummerierung unabhängig voneinander einzeln durch das Netz geschickt. Das paketorientierte Vermittlungsprinzip kommt vor allem in Netzen zur Übertragung von Daten zur Anwendung wie zum Beispiel das Internet, X.25-Netze oder Frame-Relay-Netze, deshalb werden diese Netze auch als Datennetze bezeichnet.

Wird nun ein Datennetz wie zum Beispiel das Internet zur Übertragung von leitungsvermittelnden Echtzeitdiensten wie zum Beispiel zur Übertragung von Sprache eingesetzt, so wird das in der Informationstechnologie als Konvergenz bezeichnet. Bei der Konvergenz werden zwei technisch verschiedene Netze, wie es Sprach- und Datennetze sind, angenähert. Ein auf Konvergenz basierendes Netz wird daher als konvergentes Netz bezeichnet.

Für diesen Annäherungsprozess ist es notwendig, ein Sprachsignal aus dem Sprachnetz für die Übertragung im Datennetz in einen digitalen Datenstrom umzuwandeln. Diese Umwandlung basiert auf sogenannten Codecs. Codecs sind Bausteine, die die Funktion eines Coders und Decoders in sich vereinen und eingesetzt werden, wenn die Übertragung von Informationen zwischen zwei Punkten häufig in beide Richtungen erfolgt. Manche Codecs weisen speziell auf das Eingangssignal wie z.B. Sprache zugeschnittene Charakteristika aus. Diese Codecs werden auch als Sprachcodecs bezeichnet, wobei es für die Umwandlung von Sprachsignalen in digitale Signale Sprachcodecs gibt, die für öffentliche, private und Mobilfunknetze international standardisiert sind.
Solche Codecs, die oft auch eine Datenkompression zur Reduktion der benötigten Übertragungskapazität beinhalten, sind beispielsweise G.711 (PCM unkomprimiert), G.726 (ADPCM), G.723.1 oder G.729. Allen diesen Codecs ist gemeinsam, dass sie Sprache in digitale Sprachsignale umwandeln, die dann für die Übertragung über das Datennetz in Pakete aufgeteilt werden können. Daher wird auch von digitalisierter Sprachübertragung in paketierter Form gesprochen, deren wichtigste Anwendung beim Ersatz eines Time-Division-Multiplex-Netzes durch ein konvergentes Netz erfolgt, wobei es sehr hohe Anforderungen an die Sprachqualität gestellt werden.

Für die Sprachqualität ist neben der eigentlichen Kodierung auch die Signallaufzeit durch das gesamte Netz von großer Bedeutung. Wegen der notwendigen Paketierung in Datennetzen ist die Laufzeit etwas höher als in reinen Sprachnetzen. Weiters tragen noch die Kompensation von variablen Durchlaufzeiten und die Kodierungsalgorithmen im Sender und Empfänger zur Erhöhung der Laufzeit bei. Die Schwankung der Durchlaufzeit, der sogenannten Jitter, hängt sehr stark von der Datenrate der benutzten Übertragungseinrichtung ab. Durch entsprechende Priorisierung des Sprachverkehrs im Datennetz werden allerdings sehr geringe Schwankungen der Paketdurchlaufzeit von weit unter 1ms erreicht.

Die Sprachqualität wird wegen der paketorientierten Übertragungstechnik nicht nur von Verzögerungen, den sogenannten Delays, oder vom Jitter negativ beeinflusst, sondern es kann auch als Folge von zum Beispiel Netzüberlastung zum völligen Verlust von Datenpaketen, dem Paketverlust kommen. Um diese auftretenden Paketverluste zu kompensieren, werden oft Verfahren eingesetzt, die das Sprachsignal mittels spezieller Interpolationstechniken möglichst gut rekonstruieren. Für einen weichen Übergang ist eine gewisse Überlappung von Originalsignal und Interpolation notwendig, d.h. die Interpolation kann erst abgeschlossen werden, wenn das Originalsignal nach dem Paketverlust wieder für eine bestimmte Zeit empfangen worden ist. Diese Überlappung führt jedoch zu einer zusätzlichen Verzögerung des Originalsignals und damit zu einer zusätzlichen Verlängerung der Laufzeit. Ein beispielsweise häufig eingesetzter Algorithmus zur Kompensation von Paketverlusten wird von der ITU in G.711 Appendix 1 beschrieben. Dieser Algorithmus führt zum Beispiel zu einer Signalverzögerung von 3.75ms.

Da die meisten Netzbetreiber oft strenge Anforderungen sowohl an die Übertragungsqualität der Sprache als auch an die maximale Signallaufzeit haben, ergibt sich das Problem einerseits die Paketverluste für eine gute Sprachqualität kompensieren zu müssen, aber andererseits die gesamte Signallaufzeit möglichst niedrig zu halten.

Aus dem Stand der Technik bekannte Lösungsansätze gehen davon aus, dass die Mechanismen zur Kompensation von Paketverlusten ständig aktiv sind. Somit entsteht für alle Verbindungen eine zusätzliche Signallaufzeit, die in Abhängigkeit vom eingesetzten Algorithmus zur Kompensation von Paketverlusten zum Beispiel 3.75ms betragen kann. Diese Signallaufzeit fällt auch dann an, wenn innerhalb des Datennetzes überhaupt keine Paketverluste auftreten - wie das bei Datennetzen mit sehr geringen Paketverlustraten der Fall ist.

Ein weiterer, bekannter Lösungsansatz ist eine generelle Abschaltung der Kompensation von Paketverlusten. Bei diesem Verfahren wird zwar die gesamte Signallaufzeit nicht erhöht, es kann aber dadurch zu einer Verschlechterung der Sprachqualität kommen. Das ist vor allem dann der Fall, wenn die paketierten Sprachsignal über Datennetze mit geringer Qualität wie zum Beispiel das Internet übertragen werden.

Der Erfindung liegt daher die Aufgabe zugrunde, ein Verfahren anzugeben, mit dem eine hohe Übertragungsqualität bei Sprachsignalen zur Verfügung gestellt, aber eine generelle Laufzeiterhöhung des Sprachsignals vermieden wird.

Erfindungsgemäß geschieht dies mit einem Verfahren der eingangs genannten Art, bei dem die Steuerung der Kompensation von Paketverlusten von digitalisierten Sprachsignalen in paketierter Form dynamisch erfolgt. Beim erfindungsgemäßen Verfahren ist die Kompensation von Paketverlusten zu Beginn einer Verbindung zwischen einem Sender und Empfänger zuerst deaktiviert. Es wird aber die Übertragungsqualität während der Verbindung laufend überwacht und die Kompensation von Paketverlusten in Abhängigkeit von der Übertragungsqualität aktiviert.

Das erfindungsgemäße Verfahren hat den Vorteil, dass die Kompensation von Paketverlusten dynamisch und nur in solchen Verbindungen aktiviert wird, in denen die Übertragungsqualität den Anforderungen nicht genügt.

Vorteilhaft ist es insbesondere, wenn die Kompensation von Paketverlusten erst aktiviert wird, sobald tatsächlich Paketverluste festgestellt werden. Die Signallaufzeit wird dadurch in qualitativ hochwertigen Paketnetzen mit geringer Paketverlustwahrscheinlichkeit erheblich reduziert. So ist es möglich, die strengen Anforderungen an die maximale Signallaufzeit zu erfüllen. Andererseits wird dann, wenn Paketverluste bei einer Verbindung auftreten, die Kompensation aktiviert und damit eine hohe Übertragungsqualität von Sprachsignalen erreicht.

Es ist auch vorteilhaft, die Kompensation bereits während des ersten Paketverlustes zu aktivieren und die im Signal entstehende Lücke zu verlängern. Die durch die Kompensation entstehende Laufzeitverlängerung wird dann in das Signal eingeführt, ohne dass weitere Unterberechungen des Signals entstehen.

Günstig ist es weiterhin, wenn der Mechanismus zur Kompensation von Paketverlusten beim Überschreiten von einem Schwellenwert für die Schwankung der Durchlaufzeit oder für die Paketverlustrate aktiviert wird. So wird bei Datennetzen, die eine entsprechende Qualität aufweisen, bei den meisten Verbindungen die Kompensation deaktiviert und die Signallaufzeit gering bleiben.

Vorteilhaft ist es auch, wenn mittels Signalisierung beim Verbindungsaufbau die Aktivierung der Kompensation zwischen Sende- und Empfangsstation im Datennetz ausgehandelt wird. Sind Sender und Empfänger über ein Datennetz mit hoher Qualität verbunden, das in der Regel keine Paketverluste aufweist, so kann die Kompensation für die Verbindung abgeschaltet werden. Die Überwachung der Übertragungsqualität entfällt dann. Bei allen anderen Verbindungen, bei denen sich Sender oder Empfänger nicht in einem Datennetz hoher Übertragungsqualität befinden, wird die Kompensation allerdings von Anfang an aktiviert.

Ein Vorteil stellt auch der Einsatz des Algorithmus zur Kompensation von Paketverlusten dar, wie er von der ITU in G.711 Appendix 1 beschrieben wird. Dieser Algorithmus weist eine definierte Signalverzögerung von 3.75ms auf.

Die Erfindung wird anhand von Figuren näher erläutert. Diese zeigen beispielhaft:
- Fig. 1: schematischer Aufbau eines Netzes, in dem das Verfahren zur dynamischen Steuerung der Kompensation von Paketverlusten zur Anwendung kommt
- Fig. 2: Verfahrensschritte zum Verfahren zur dynamischen Steuerung der Kompensation von Paketverlusten

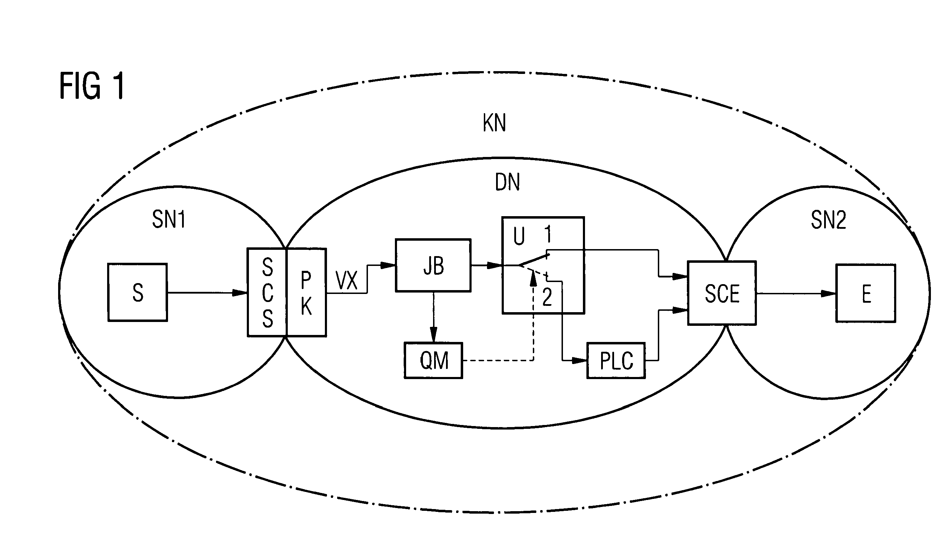

Figur 1 zeigt ein Netz KN, das aus Sprachnetzen SN1 bzw. SN2 und aus einem Datennetz DN besteht. Ein Sender S und ein Empfänger E, zwischen denen Information in Form von Sprachsignalen übermittelt wird, befinden sich in den Sprachnetzen SN1 bzw. SN2. Die Verbindung VX zur Übermittlung von Informationen wird allerdings über das Datennetz DN aufgebaut. Daher ist es notwendig, ein analoges Sprachsignal des Senders S für die Übertragung im Datennetz DN in einen digitalen Datenstrom umzuwandeln.

Für diese Umwandlung wird auf Seiten des Senders S ein Sprachcodec SCS eingesetzt, von dem das analoge Sprachsignal in ein digitalisiertes Sprachsignal umgewandelt wird. Vor der Übertragung wird dieses Sprachsignal von der Paketierung PK in paketierte Form gebracht. Die Datenpakete werden dann im Datennetz DN über die Verbindungen VX zum Empfänger E, der sich wieder in einem Sprachnetz SN2 befindet, übertragen.

Auf der Seite des Empfängers E werden in einem Jitterbuffer JB so viele Datenpakete zwischengespeichert, wie in der Zeit des längsten, anzunehmenden Jitter eintreffen. Direkt mit Jitterbuffer JB ist die Qualitätsüberwachung QM verbunden, von der die Informationsübertragung über die Verbindung VX auf Paketverlust und Jitter überwacht wird. Von der Qualitätsüberwachung QM wird zusätzlich mittels eines Steuersignals auch die Kompensation von Paketverlusten PLC angesteuert.

Die Kompensation von Paketverlusten PLC ist beim Aufbau der Verbindung und zu Beginn der Informationsübertragung deaktiviert. Das in paketierter Form vorliegende, digitalisierte Sprachsignal wird direkt vom Jitterbuffer JB zum empfängerseitigen Sprachcodec SCE gesendet. Der Umschalter U befindet sich dabei in der Stellung 1. Das digitalisierte Sprachsignal in paketierter Form wird vom empfängerseitigen Sprachcodec SCE wieder in ein analoges Sprachsignal umgewandelt und zum Empfänger E im Sprachnetz SN2 weitergeleitet.

Wird von der Qualitätsüberwachung QM allerdings ein Paketverlust festgestellt, so wird von der Qualitätsüberwachung QM ein Signal an den Umschalter U gesandt, um die Kompensation von Paketverlusten PLC zu aktivieren. Der Umschalter U wird dann in die Stellung 2 umgestellt. Das in paketierter Form vorliegende, digitalisierte Signal wird nun zur Kompensation von Paketverlusten PLC geleitet, um den Paketverlust auszugleichen und das Sprachsignal zu rekonstruieren. Nach der Kompensation von Paketverlusten PLC wird das digitalisierte Signal zum empfängerseitigen Sprachcodec SCE gesendet, von dem es wieder in ein analoges Sprachsignal umgewandelt wird, das zum Empfänger E im Sprachnetz SN2 geleitet wird.

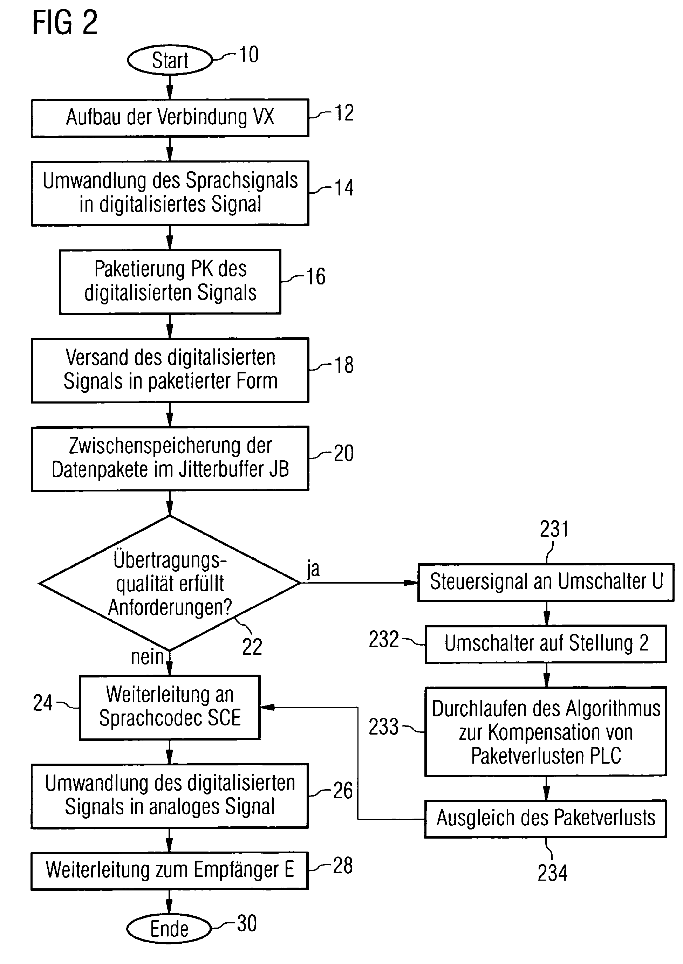

Figur 2 zeigt Verfahrensschritte zur dynamischen Steuerung der Kompensation von Paketverlusten. Das Verfahren beginnt mit einem Verfahrensschritt 10. In einem dem Verfahrensschritt 10 folgenden Verfahrensschritt 12 wird die Verbindung VX zwischen dem Sender S im Sprachnetz SN1 zum Empfänger E im Sprachnetz SN2 aufgebaut, um eine Information in Form eines Sprachsignals zu übertragen. Dabei läuft die Verbindung VX über ein Datennetz DN. Da es sich durch die Annäherung von Sprachnetzen SN1 bzw. SN2 und einem Datennetz DN um ein konvergentes Netz KN handelt, wird in einem Verfahrensschritt 14 das analoge Sprachsignal von einem Sprachcodec SCS in ein digitalisiertes Signal umgewandelt. In einem nachfolgenden Verfahrensschritt 16 wird das digitalisierte Signal von der Paketierung PK in paketierte Form gebracht. In einem Verfahrensschritt 18 wird das digitalisierte Sprachsignal in paketierter Form über die Verbindung VX im Datennetz versandt. In einem darauffolgenden Verfahrenschritt 20 werden so viele Datenpakete im Jitterbuffer JB zwischengespeichert, wie in der Zeit des längsten, anzunehmenden Jitter eintreffen. Mit dem Jitterbuffer JB ist die Qualitätsüberwachung QM verbunden, von der in einem Verfahrensschritt 22 die Übertragungsqualität der Verbindung VX laufend überprüft wird. Diese Übertragungsqualität kann beispielweise dadurch bewertet werden, dass Paketverluste und Laufzeitschwankungen (Jitter) überwacht werden.

Wird im Verfahrensschritt 22 ausreichende Übertragungsqualität festgestellt, so bleibt der Umschalter U in Stellung 1 und das digitalisierte Sprachsignal in paketierter Form wird in einem Verfahrensschritt 24 an den empfängerseitigen Sprachcodec SCE weitergeleitet. Vom Sprachcodec SCE in einem Verfahrensschritt 26 wieder in ein analoges Sprachsignal umgewandelt und in einem Verfahrensschritt 28 an den Empfänger E im Sprachnetz SN2 gesandt. Mit einem Verfahrensschritt 30 wird das Verfahren beendet, bis wieder eine Verbindung zwischen dem Sender S und dem Empfänger E aufgebaut wird.

Wird im Verfahrensschritt 22 jedoch festgestellt, dass beispielsweise ein Paketverlust oder eine zu hohe Laufzeitschwankung aufgetreten ist, so wird in einem Verfahrensschritt 231 von der Qualitätsüberwachung QM ein Steuersignal an den Umschalter U gesandt und der Umschalter U in einem Verfahrensschritt 232 in die Stellung 2 gebracht. In einem drauffolgenden Verfahrensschritt 233 wird das digitalisierte Sprachsignal in paketierter Form zur Kompensation von Paketverlusten PLC geleitet und dort in einem Verfahrensschritt 234 der Paketverlust ausgeglichen und das Sprachsignal rekonstruiert. Im Verfahrensschritt 24 wird das digitalisierte Signal zum empfängerseitigen Sprachcodec SCE gesendet, von dem es im Verfahrensschritt 26 in ein analoges Sprachsignal umgewandelt wird. Im Verfahrensschritt 28 wird das Sprachsignal zum Empfänger E im Sprachnetz SN2 geleitet. Mit dem Verfahrensschritt 30 wird das Verfahren beendet bis zu einem neuerlichen Verbindungsaufbau.

Das in Figur 2 dargestellte Flussdiagramm ist nur eine Möglichkeit für die Abfolge der Verfahrensschritte. So wird bei einem anderen Ausführungsbeispiel im Verfahrensschritt 22 ein Schwellwert der Paketverlustübertragungsrate oder der Durchlaufszeitschwankung von der Qualitätskontrolle QM überwacht und beim Überschreiten dieses Schwellwertes die Verfahrensschritte 231, 232, 233 und 234 durchlaufen.

Ein Sonderfall in Abweichung vom beschriebenen Ausführungsbeispiele ergibt sich unter anderem dann, wenn Sender S, Sprachcodec SCS und die Paketierung PK zusammenfallen, der Sender S also direkt und ohne ein dazwischen liegendes Sprachnetz SN1 an das Datennetz DN angeschlossen ist. Ebenso kann der Empfänger E mit dem Sprachcodec SCE und Einrichtungen des Jitterbuffers JB, dem Umschalter U, der Qualitätsüberwachung QM sowie der Kompensation von Paketverlusten PLC zusammenfallen. Das erfindungsgemäße Verfahren ist auch auf diesen und weitere denkbare Sonderfälle anwendbar.

## Patentansprüche

1. Verfahren zur Steuerung der Kompensation von Paketverlusten (PLC) für eine Übertragung von digitalisierten Sprachsignalen in paketierter Form in einem Netz (KN) **dadurch gekennzeichnet, dass** die Steuerung der Kompensation von Paketverlusten (PLC) dynamisch erfolgt, dass die Kompensation von Paketverlusten (PLC) zu Beginn einer Verbindung (VX) zwischen einem Sender (S) und einem Empfänger (E) deaktiviert ist, dass die Übertragungsqualität der Verbindung (VX) überwacht wird (22) und dass die Kompensation von Paketverlusten (PLC) in Abhängigkeit von der Übertragungsqualität aktiviert wird (231;232).

2. Verfahren nach Anspruch 1 **dadurch gekennzeichnet**, **dass**die Kompensation von Paketverlusten (PLC) aktiviert wird (231;232), sobald Paketverluste festgestellt werden.

3. Verfahren nach Anspruch 1 **dadurch gekennzeichnet, dass** die Kompensation von Paketverlusten (PLC) sofort während des ersten Paketverlustes aktiviert (231;232) und die im Signal entstehende Lücke verlängert wird um die durch die Kompensation (PLC) entstehende Laufzeitverlängerung einzufügen.

4. Verfahren nach Anspruch 1 **dadurch gekennzeichnet, dass** die Kompensation von Paketverlusten (PLC) dann aktiviert wird (231;232), wenn ein Schwellenwert für die Schwankung der Durchlaufzeit überschritten wird.

5. Verfahren nach Anspruch 1 **dadurch gekennzeichnet, dass** die Kompensation von Paketverlusten (PLC) dann aktiviert wird (231;232), wenn ein Schwellenwert für die Paketverlustrate überschritten wird.

6. Verfahren nach Anspruch 1 **dadurch gekennzeichnet, dass** eine Aktivierung zur Kompensation von Paketverlusten (PLC) beim Verbindungsaufbau durch Signalisierung zwischen Sender (S) und Empfänge (E) in Abhängigkeit von der Übertragungsqualität des Netzes (KN) ausgehandelt wird.

7. Verfahren nach einem der Ansprüche 1 bis 6 **dadurch gekennzeichnet, dass** für die Kompensation von Paketverlusten (PLC) ein Algorithmus mit hoher Qualität und geringer Komplexität (233) nach ITU-T G.711 vorgesehen ist.

8. Verfahren nach einem der Ansprüche 1 bis 7 **dadurch gekennzeichnet, dass** für die Digitalisierung von Sprachsignalen (14) ein Pulse-Code-Modulation-Verfahren vorgesehen ist.

9. Verfahren nach einem der Ansprüche 1 bis 8 **dadurch gekennzeichnet, dass** als Netz (KN) ein konvergentes Netz basierend auf Sprach- (SN1; SN2) und Datennetzen (DN) vorgesehen ist.
